# EUROPÄISCHE PATENTSCHRIFT

(11) **EP 2 098 356 B1**
(45) Veröffentlichungstag und Bekanntmachung des Hinweises auf die Patenterteilung: **18.01.2017**
(21) Anmeldenummer: 09153845.4
(22) Anmeldetag: 27.02.2009
(51) Int. Cl.: B29C 49/78, B29C 49/12, B29C 49/58, B29K 67/00, B29C 49/06, B29C 49/36, B29C 49/48, B29C 49/42, B29C 33/26

(54) **Vorrichtung und Verfahren zum Herstellen von Behältern**
Device and method for producing plastic containers
Dispositif et procédé de production de récipients de matière plastique

(30) Priorität: 05.03.2008 DE 102008012757
(43) Veröffentlichungstag der Anmeldung: 09.09.2009
(73) Patentinhaber: Krones AG, 93073 Neutraubling (DE)
(72) Erfinder: Dieter, Finger, 93073, Neutraubling (DE)
(74) Vertreter: Bittner, Bernhard

(56) Entgegenhaltungen:
- WO-A1-2006/029584
- DE-A1-102007 005 489

## Beschreibung

Die vorliegende Erfindung bezieht sich auf eine Vorrichtung zum Herstellen von Kunststoffbehältnissen.

Im Bereich der getränkeherstellenden Industrie ist man in jüngerer Zeit dazu übergegangen, anstelle von Glasflaschen Kunststoffflaschen, beispielsweise aus PET, zu verwenden. Diese Kunststoffflaschen weisen gegenüber Glasflaschen diverse Vorteile, wie z. B. ein geringeres Gewicht, auf. Dabei ist es bekannt, diese Kunststoffbehältnisse aus sogenannten Vorformlingen zu erzeugen, wobei diese Vorformlinge dabei üblicherweise zunächst erwärmt und anschließend in einer Blaseinrichtung zu dem Kunststoffflaschen expandiert werden.

Bei diesem Expansionsvorgang wird einerseits Druckluft zum Expandieren der Behältnisse eingesetzt und zum anderen werden auch mechanische Elemente wie Reckstangen verwendet, welche den Vorformling in eine gewünschte Richtung dehnen. Diese Reckstangen werden dabei üblicherweise mechanisch mit Hilfe einer feststehenden Reckkurve geführt.

Auf dieser Reckkurve werden die Reckschlitten mit den daran montierten Reckstangen geführt abwärts bewegt. Synchron zu dieser Reckbewegung werden die Blasluftventile exakt zugeschaltet, um möglichst reproduzierbare Flaschenqualitäten zu garantieren. Ursprünglich waren Ausführungsformen mit mechanisch betätigbaren Ventilen bekannt. Die Handhabung und vor allem der Wechsel von Flaschensorten gestaltete sich jedoch zu aufwändig. Im Zuge der Einführung von immer exakter schaltenden vorluftgesteuerten Hochdruckmagnetventilen ist es heute üblich, die Ventile elektrisch anzusteuern.

Die DE 10 2007 005 489 A1, die eine Vorrichtung gemäß dem Oberbegriff des Anspruchs 1 und ein Verfahren gemäß dem Oberbegriff des Anspruchs 9 offenbart, beschreibt eine rundgetaktete
Maschine und insbesondere eine Blasformmaschine. Diese Maschine weist einen drehend angetriebenen Trommelzylinder auf, an dessen Außenumfang eine Mehrzahl von einzelnen Verarbeitungsstationen angeordnet ist. Dabei ist jeder Verarbeitungsstation ein autonom arbeitender Stationskontroller zugeordnet, der selbsttätig die dort ablaufenden Verarbeitungsschritte ausführt. Als Eingangsgröße wird die Winkelinformation eines Drehgebers verwendet wobei dieser Drehgeber fest mit dem Trommelzylinder verbunden ist. Aus der EP 1 306 195 B1 ist ein Verfahren und eine Vorrichtung zur Steuerung eines Blasvorgangs bekannt. Dabei werden ebenfalls auf einem rotierenden Blasrad angeordnete Blasstationen angesteuert, wobei es dabei möglich ist, unterschiedlichen Ventilen unterschiedliche Sollwerte der jeweiligen Ansteuerung zuzuordnen und diese Sollwerte für die Ansteuerung für jedes Ventil individuell zu ermitteln.

Der vorliegenden Erfindung liegt die Aufgabe zugrunde, eine Vorrichtung und ein Verfahren zum Erzeugen von Kunststoffbehältnissen zur Verfügung zu stellen, welches gegenüber dem Stand der Technik individueller einsetzbar ist und welches insbesondere weniger umständlich auf unterschiedliche Sorten von Kunststoffbehältnissen angepasst werden kann.

Dies wird erfindungsgemäß durch eine Vorrichtung nach Anspruch 1 und ein Verfahren nach Anspruch 9 erreicht.

Vorteilhafte Ausführungsformen und Weiterbildungen sind Gegenstand der Unteransprüche.

Eine erfindungsgemäße Vorrichtung zum Erzeugen von Kunststoffbehältnissen weist eine Transporteinrichtung auf, an der eine Vielzahl von Blasstationen zum Expandieren von Vorformlingen zu Kunststoffbehältnissen angeordnet ist. Dabei weist jede dieser Blasstationen einen Aufnahmeraum für einen zu expandierenden Vorformling, wenigstens eine Zuführleitung zum Zuführen eines gasförmigen Mediums an den Vorformling, wenigstens ein Ventil, welches die Zuführung des gasförmigen Mediums an den Vorformling steuert sowie ein betätigtes Reckelement zum Recken der Vorformlinge auf. Daneben weist jede Station eine Antriebseinrichtung zum Bewegen des Reckelements auf.

Erfindungsgemäß weist jede Blasstation eine Steuerungseinrichtung auf, welche sowohl das Ventil als auch die Antriebseinrichtung zur Erzeugung des Kunststoffbehältnisses steuert. Im Gegensatz zum Stand der Technik wird daher vorgeschlagen, jede einzelne Blasstation mit einer eigenen elektrisch angetriebenen Reckstangenmechanik auszustatten bzw. einem eigenen elektrischen Antrieb zum Betreiben der Reckstange. Weiterhin wird erfindungsgemäß vorgeschlagen, sowohl die Antriebseinrichtung für das Reckelement als auch das oder die Ventile einheitlich von einer gemeinsamen Steuereinheit anzusteuern. Durch die Einbindung der Reckstangensteuerung in die Steuerung der Blasventile ist es möglich, die gesamte Steuerung beispielsweise bei Produktwechsel schnell anzupassen.

Damit sind für jede Blasstation die Ansteuerung des Antriebs der Reckstange und die Ansteuerung der Ventile aufeinander abgestimmt.

Auch ist es möglich, die Reckstangensteuerung sehr präzise auf die Steuerung des Ventils anzupassen. Bei der Transporteinrichtung handelt es sich vorzugsweise um ein Blasrad. Bevorzugt sind die Steuerungseinrichtungen der einzelnen Blasstationen in der Lage, unabhängig voneinander zu arbeiten. Auf diese Weise ist eine entsprechende Anlage insgesamt flexibler in der Anwendung.

Bei einer vorteilhaften Ausführungsform weist jede Blasstation eine Vielzahl von Ventilen auf, welche die Zuführung von gasförmigen Medien an die Behältnisse steuern. Der Expansionsprozess derartiger Behältnisse ist kompliziert und teilt sich in mehrere Abschnitte wie beispielsweise ein Vorblasen, eine Hauptexpansionsphase und dergleichen auf. Um diese einzelnen Teilvorgänge zu steuern wird eine Vielzahl von Ventilen verwendet. Vorzugsweise sind die digitalen Ausgabebaugruppen zur Steuerung der Ventile in einem oder mehreren zentralen rotierenden Schaltkästen in dem Blasrad untergebracht. Auf diese Weise ist eine schnellere Umrüstung auf eine andere Flaschensorte möglich, da die mechanischen Kurven für die Betätigung der Ventile nicht mehr verschoben werden müssen sondern stattdessen durch Anwahl einer neuen Rezeptur auch die Schaltpositionen der Blasventile mit umgestellt werden.

Vorzugsweise handelt es sich bei dem mechanisch betätigten Reckelement um eine Reckstange. Diese Reckstange dient vorzugsweise dazu, das zu expandierende Behältnis in seiner Längsrichtung zu dehnen. Die Antriebe für die Reckelemente sind bevorzugt elektrische Servomotoren.

Bei einer weiteren vorteilhaften Ausführungsform weist wenigstens eine Blasstation eine Sensoreinrichtung auf, welche einen physikalischen Zustand des Behältnisses oder der Blasstation erfasst. Genauer kann beispielsweise ein Druck gemessen, oder ein Dehnungszustand des Behältnisses oder dergleichen ermittelt werden. Vorzugsweise steht diese Sensoreinrichtung in Kommunikationsverbindung mit der Steuereinrichtung. Damit ist es möglich, den Blasvorgang auch unter Zuhilfenahme von Sensordaten zu steuern.

Bei einer weiteren Ausführungsform werden die oben beschriebenen Steuereinrichtungen bzw. deren Ausgangsstufen dezentral an den Blasstationen angebracht und besonders bevorzugt durch Bussysteme angesteuert. Durch diesen dezentralen Aufbau kann der zentrale Schaltkasten entfallen und die Montage der Streckblasmaschine wird vereinfacht bzw. beschleunigt. Besonders bevorzugt werden bei dieser Ausführungsform Schaltzeitverschiebungen, die durch die Laufzeiten der Bussysteme entstehen, konstruktiv verhindert. Zu diesem Zweck wäre es möglich, die dezentralen Ausgangsstufen mit Vergleichern auszustatten, die die Position des Blasrads laufend einlesen und mit den Sollwertvorgaben vergleichen. Auf diese Weise könnte eine verzögerungsfreie oder zumindest verzögerungsarme Ansteuerung der Ventile erreicht werden. Bei der erfindungsgemäßen Ausführungsform weist jede Blasstation einen Zeitgeber auf. Durch diesen Zeitgeber ist es möglich, beispielsweise eine Winkelinformation einzulesen und an Hand dieser Winkelinformation gezielt für jede Blasstation zeitlich genau ablaufende Vorgänge vorzugeben. Bei einem bestimmten Winkel wird der Zeitgeber gestartet, danach erfolgt eine winkelunabhängige Ablausteuerung. Durch den Zeitgeber, der bevorzugt zu Beginn eines Blasvorgangs winkelabhängig zurückgesetzt wird, ist es möglich, gezielt für jede Blasstation zeitlich genau ablaufende Vorgänge vorzugeben.

Dabei ist zu beachten, dass die einzelnen Schritte bei der Expansion von Vorformlingen zu Kunststoffbehältnissen weniger von der genauen Winkelposition der Blasstationen abhängen, sondern vielmehr der zeitliche Ablauf zwischen den Ventilen bzw. zwischen den Ventilen und dem Reckvorgang bzw. die Einhaltung genauer zeitlicher Rahmen von besonderer Bedeutung ist.

Bei einer weiteren vorteilhaften Ausführungsform weist die Vorrichtung einen Positionssensor auf, der eine Position der Transporteinrichtung erfasst. Genauer wird eine bestimmte Position des Blasrads erfasst und auf diese Weise ermittelt, welche Blasstation zu dem Moment der Bestimmung einen bestimmten Vorgang ausführt, beispielsweise gerade mit einem Behältnis befüllt wird.

Das oben erwähnte servoelektrische Recken bietet einige Vorteile, die auch für die hier beschriebenen Rundläufermaschinen mit rotierenden Blasrädern interessant sind. So ist es möglich, auf mechanische Reckanschläge zu verzichten. Die Positionen für die verschiedenen Flaschensorten können in Rezepten gespeichert werden, damit wird ein Flaschenwechsel wesentlich beschleunigt.

Werden auf einer Maschine zwei Flaschensorten mit stark abweichenden Volumen produziert, so variieren auch die Produktionsgeschwindigkeiten sehr stark. Bei einer aus dem Stand der Technik bekannten feststehenden Reckkurve entstehen dann durch die unterschiedlichen Reckgeschwindigkeiten starke verfahrenstechnische Einschränkungen. Bei dem elektrischen Reckverfahren erweist es sich deshalb als Vorteil, die Reckgeschwindigkeit unabhängig von der Produktionsgeschwindigkeit frei parametrieren zu können.

Bei einer weiteren vorteilhaften Ausführungsform weist die Vorrichtung eine zentrale Steuerungseinrichtung auf, welche in Kommunikationsverbindung mit den Steuerungseinricht-ungen der einzelnen Blasstationen steht. Diese zentrale Steuerungseinrichtung spricht, beispielsweise in Reaktion auf ein Ausgangssignal des Positionssensors, eine bestimmte Steuerungseinrichtung einer bestimmten Blasstation an, damit diese einen vorgegebenen Reaktionsvorgang durchführen kann. Bei einer weiteren vorteilhaften Ausführungsform weist die Vorrichtung eine Speichereinrichtung auf, in der Korrelationsdaten zur Steuerung der Antriebseinrichtung und der Ventile abgelegt sind.

Vorzugsweise ist eine Speichereinrichtung in jeder der einzelnen Steuereinrichtungen integriert, sodass eine bestimmte Bewegung der Reckstangen in genau korreliertem Verhältnis zu der Ansteuerung der einzelnen Ventile steht.

Vorzugsweise handelt es sich bei den Steuerungseinrichtungen um dezentrale Servoumrichter, die in den einzelnen Blasstationen angeordnet sind. Durch diese dezentrale Montage kann auf einem zentralen Schaltkasten verzichtet werden, wodurch sich Platz und Kosten einsparen lassen. Eine wesentliche Idee der Erfindung liegt darin, mehrere und im Idealfall alle Funktionen einer Blasstation in einer logischen Einheit zusammenzufassen. Hierzu übernimmt der Servoumrichter nicht nur die Ansteuerung des Servomotors für das elektrische Recken sondern auch die Ansteuerung einer Station zugeordneter Ventile. Darüber hinaus können auch Sensorsignale wie Nährungsinitiatoren, Druckschalter, Wegaufnehmer, Temperaturaufnehmer und dergleichen eingelesen und weiterverarbeitet werden. Die Servoumrichter sind hintereinander und mit einer zentralen Steuerung im stehenden Maschinenteil mit einem geeigneten Bussystem verbunden.

Durch die Konzentration auf nur noch eine Steuerung pro Blasstation können Platz und Kosten eingespart werden. Genauer gesagt lassen sich sämtliche Komponenten einer Station kostengünstig in Serie vormontierten und die komplette Funktion lässt sich durch den autarken Aufbau bereits vor Einbau in das Blasrad testen.

Ein weiterer Vorteil der erfindungsgemäßen Vorrichtung liegt darin, dass die Ansteuerungsgenauigkeit und damit auch die Flaschenqualität wesentlich gesteigert werden können, weil keine Synchronisation mehr zwischen der bislang bestehenden Reckkurve und den drehenden Ventilen mit Hilfe von Positionssensoren erforderlich ist. Vorteilhaft wird die Anforderung an die Genauigkeit dadurch gelöst, dass jeder Servoumrichter d. h. jede Steuerungseinrichtung nach dem Schließen der zugehörigen Form der Blasstation ein Startsignal erhält und anschließend zeitgesteuert und winkelunabhängig den Blasablauf abarbeitet.

Bei einer Ausführungsform weist die Steuereinrichtung bzw. der Servoumrichter bereits alle digitalen und analogen Ein- und Ausgaben auf. Dies ermöglicht eine äußerst kompakte Bauweise. Andererseits steigt damit auch der

Verkabelungsaufwand innerhalb der betreffenden Blasstation. Die vorliegende Erfindung ist weiterhin auf ein Verfahren zum Erzeugen von Kunststoffbehältnissen aus Vorformlingen gerichtet, wobei die Vorformlinge in einer Vielzahl von Blasstationen transportiert und während dieses Transports zu Kunststoffbehältnissen expandiert werden wobei für den Expansionsvorgang in jeder Blasstation den Vorformlingen ein gasförmiges Medium zugeführt wird und die Zuführung dieses gasförmigen Mediums mittels wenigstens eines Ventil gesteuert wird und wobei die Behältnisse in jeder Blasstation für eine Expansionsvorgabe mit wenigstens einem betätigten Reckelement gereckt werden wobei diese Reckelemente mit jeweils einer Antriebseinrichtung unabhängig voneinander bewegbar sind. Erfindungsgemäß weist jede Blasstation eine Steuerungseinrichtung auf, welche sowohl den Reckvorgang als auch die Zuführung des gasförmigen Mediums in die Behältnisse steuert.

Damit wird auch bei dem erfindungsgemäßen Verfahren vorgeschlagen, den gesamten Expansionsvorgang d. h. sowohl die Ansteuerung der Ventile als auch die Ansteuerung der Reckstange durch die Steuerungseinrichtung zu steuern.

Bei dem erfindungsgemäßen Verfahren werden die Blasstationen mit einer Transporteinrichtung transportiert. Vorzugsweise handelt es sich bei der Transporteinrichtung um ein Blasrad, an dem die einzelnen Blasstationen angeordnet sind.

Wie oben erwähnt, werden zunächst die thermoplastischen Vorformlinge in einer Heizstation aufgeheizt sodass sie anschließend in der Blasform durch Blasformung bzw. durch Streckblasen verformt werden können um so eine gewünschte Behälterform zu schaffen. Dabei werden vorzugsweise an der Heizstation die Vorformlinge z. B. auf einer Gliederkette mit Aufnahmendornen befördert. Die erwärmten Vorformlinge werden damit mit Hilfe einer Übergabevorrichtung dem Blasrad zugeführt auf dem sich auf den Umfang verteilt mehrere Blasstationen befinden. Diese Blasstationen bzw. Blasformen weisen vorzugsweise zwei auseinanderklappbare Formhälften sowie einen Formboden auf, in denen Aussparungen, die der Form des herzustellenden Behälters entsprechen, ausgebildet sind. Nachdem ein Vorformling der aufgeklappten Blasform zugeführt worden ist, wird die aufgeklappte Blasform geschlossen und der Behälter wird durch Blasformen bzw. durch Streckblasen erzeugt. Die Blasform öffnet sich dann aufs Neue und der fertige Behälter gelangt über einen Auslaufstern zur Behälterausgabe.

Bei einem bevorzugten Verfahren werden Positionen der Transporteinrichtung erfasst. Damit wird insbesondere ein Winkel des Blasrads zu einem bestimmten Zeitpunkt bestimmt. Bevorzugt wird in Reaktion auf eine Erfassung der Position der Transporteinrichtung eine bestimmte Blasstation ausgewählt. Vorteilhaft wird auf Grund des Winkels diejenige Blasstation ermittelt, welche gerade mit einem Vorformling beladen wird. Für diese Blasstation wird besonders bevorzugt ein Startsignal ausgegeben sodass abhängig von diesem Startsignal Zeitgeber aktiviert werden, welche wiederum den zeitlichen Rahmen für den Blasvorgang und die innerhalb des Blasvorgangs stattfindenden Vorgänge steuern.

Damit steuern erfindungsgemäß die Steuerungseinrichtungen die Blasvorgänge zeitbasiert, genauergesagt zeitbasiert in Abhängigkeit von dem oben erwähnten Startsignal.

Bei einer weiteren vorteilhaften Ausführungsform sind die Steuerung der Antriebselemente und der Ventile miteinander korelliert.

Vorzugsweise werden zur Steuerung des Blasvorgangs auch Sensorsignale eingelesen. Dabei kann es sich wiederum um Signale der oben erwähnten Druckschalter, Temperaturaufnehmern, Wegaufnehmer und dergleichen handeln.

Weitere Vorteile und Ausführungsform ergeben sich aus den beigefügten Zeichnungen:
Darin zeigen:
   - Fig. 1: eine schematische Darstellung einer erfindungsgemäßen Vorrichtung;
   - Fig. 2: eine schematische Darstellung eines Teils einer Blasstation;
   - Fig. 3: ein Blockdiagramm zur Veranschaulichung eines erfindungsgemäßen Verfahrens;
   - Fig. 4: ein Ablaufdiagramm für ein erfindungsgemäßes Verfahren, und
   - Fig. 5: ein weiteres Ablaufdiagramm für ein erfindungsgemäßes Verfahren.

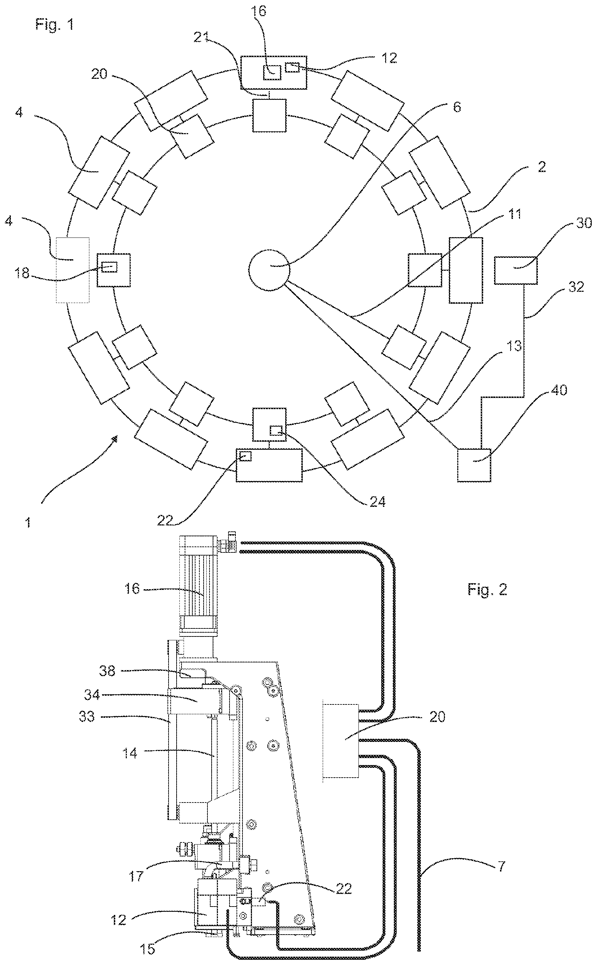

Fig. 1 zeigt grob schematisch eine erfindungsgemäße Vorrichtung 1 zum Erzeugen von Kunststoffbehältnissen. Diese Vorrichtung weist eine (nur schematisch gezeigte) Transporteinrichtung 2 in Form eines Blasrads auf, wobei an diesem Blasrad eine Vielzahl von Blasstationen 4 zum Expandieren von Vorformlingen angeordnet ist. Das Bezugszeichen 20 bezieht sich auf Steuerungseinrichtungen bzw. Servoumrichter, die jeder einzelnen Blasstation 4 zugeordnet sind. Diese einzelnen Steuereinrichtungen 20 sind damit (drehend) auf dem Blasrad 2 angeordnet. Die Energieversorgung dieser Steuerungseinrichtungen erfolgt über einen mit dem Bezugszeichen 6 gekennzeichneten Schleifring und über Verbindungsleitungen 11.

Jede einzelne Blasstation weist eine Antriebseinrichtung 16 für eine (nicht gezeigte) Reckstange sowie eine Vielzahl von Ventilen 12 auf, welche den eigentlichen Blasvorgang steuern. Auch die elektrische Versorgung dieser Antriebseinrichtungen kann über den Schleifring 6 erfolgen.

Daneben weist jede Blasstation eine und bevorzugt mehrere Sensoreinrichtungen 22 auf, welche ebenfalls in Kommunikationsverbindung mit der jeweiligen Steuereinrichtung 20 stehen. Weiterhin weist jede Blasstation bzw. deren Steuerungseinrichtung 20 einen Zeitgeber 24 auf, der in Abhängigkeit von einem Startsignal den betreffenden Blasvorgang steuert. Das Bezugszeichen 30 bezieht sich auf einen Positionssensor, der eine Winkelposition des Blasrads erfasst. Diese Winkelinformation wird einer zentralen Steuereinrichtung 40, die stehend vorgesehen ist, über eine Kommunikationsverbindung 32 weitergeleitet.

Über eine Kommunikationsverbindung 13 wird über den Schleifring 6 eine entsprechende Zeitinformation sowie ein Starttriggersignal an die Steuereinrichtungen 20 weitergegeben. Weiterhin wird in Abhängigkeit von der von dem Positionssensor 30 ermittelten Position des Blasrads festgestellt, welche der einzelnen Blasstationen 4 gerade einen Vorformling übernommen hat. An diese entsprechende Blasstation wird ein Startsignal gesendet und in Abhängigkeit von diesem Startsignal wird der Expansionsvorgang der Behältnisse eingeleitet. Das Bezugszeichen 18 bezieht sich auf eine Speichereinrichtung. Jede der einzelnen Steuereinrichtungen weist hier eine Speichereinrichtung 18 auf. In dieser Speichereinrichtung können beispielsweise Daten abgelegt sein, welche den zeitlichen Ablauf der Ventilsteuerung oder auch der Reckstangenbewegung regeln. Daneben können auch Sollwerte abgelegt sein, die mit von den Sensoreinrichtungen 22 ausgegebenen Messwerten verglichen werden können. Die Steuereinrichtungen 20 kommunizieren jeweils über Verbindungsleitungen 21 mit den Blasstationen Fig. 2 zeigt eine teilweise Darstellung einer Blasstation 4. Dabei bezieht sich das Bezugszeichen 16 auf eine Antriebseinrichtung in Form eines Servomotors welche die Bewegung einer Reckstange 14 steuert. Genauer gesagt steuert diese Antriebseinrichtung 16 ein Transportband 33, an dem wiederum die Reckstange 14 über eine Klammer 34 angeordnet ist. Das Bezugszeichen 12 zeigt ein Ventil bzw. eine Ventilinsel mit einer Vielzahl von Ventilen. Über einen Auslass 15 kann einem (nicht gezeigten) Behältnis Druckluft zugeführt werden, um dieses zu expandieren. Das Behältnis ist dabei innerhalb einer (nicht gezeigten) Blasform angeordnet. Auch kann durch diesen Auslass 15 die Reckstange zum Recken der Behältnisse hindurchgeführt werden. Das Bezugszeichen 20 bezieht sich auf die Steuerungseinrichtung, die der Blasstation 4 zugeordnet ist. Diese Steuerungseinrichtung steuert einerseits die Antriebseinrichtung d. h. den Servoantrieb 16 andererseits jedoch auch die einzelnen Ventile der Ventilinsel 12 und liest zudem auch Signale von der Sensoreinrichtung 22 wie beispielsweise ein Drucksignal ein. Weiterhin kann die Steuerungseinrichtung 20 noch mit weiteren Sensoreinrichtungen in Verbindung stehen, die physikalische Eigenschaften des Behältnisses selbst wie beispielsweise einen Innendruck im Behältnis, eine Wandungsstärke der Behältnisse und dergleichen erfassen. Zu diesem Zweck ist eine weitere Kommunikationsverbindung 7 vorgesehen.

Das Bezugszeichen 17 bezieht sich auf eine Zuleitung, welche ein gasförmiges Medium an die Ventile 12 leitet. Weitere entsprechende Zuleitungen sind nicht dargestellt.

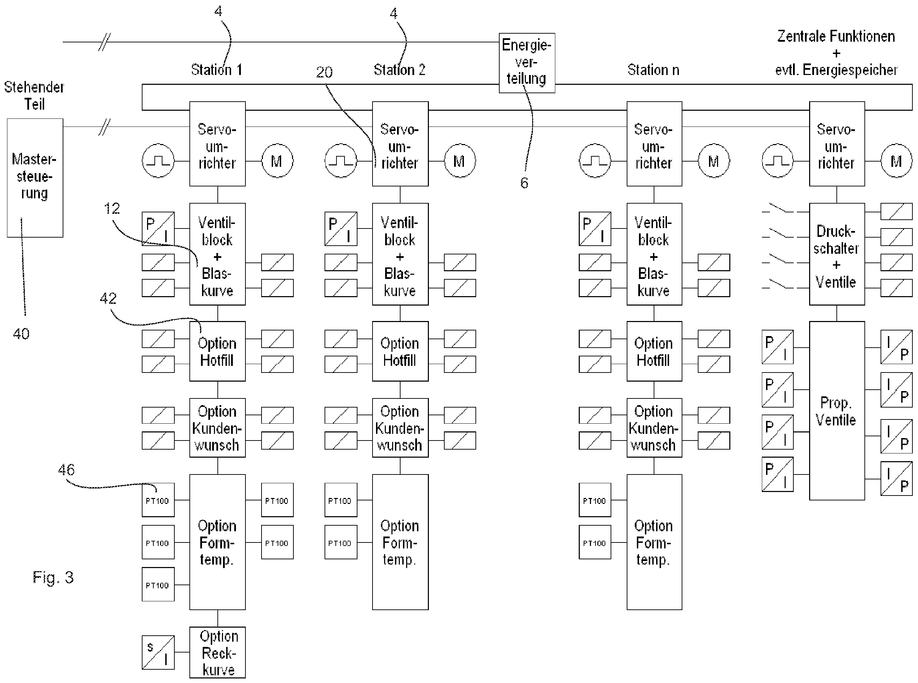

Fig. 3 zeigt ein schematisches Aufbaudiagramm einer erfindungsgemäßen Vorrichtung. Dabei ist wiederum eine zentrale Energieverteilung 6 gekennzeichnet, welche die einzelnen Blasstationen bzw. die Steuerungseinrichtungen 20 der einzelnen Blasstationen mit Energie versorgt. Gleichzeitig ist im stehenden Teil der Maschine eine zentrale Steuerungseinrichtung 40 vorgesehen, welche hier ebenfalls mit den einzelnen Steuerungseinrichtungen 20 kommuniziert. Über die Steuerungseinrichtung 20 werden die einzelnen Ventile eines Ventilblocks angesteuert, wobei hierzu jeweils eine bestimmte Blaskurve zugrundegelegt bzw. abgearbeitet werden kann. Zusätzlich könnten die einzelnen Blasstationen auch mit einer Funktion ausgestattet werden, welches ein Spülen der Behältnisse bewirkt. In der Umsetzung könnten weitere Ventile vorgesehen sein, die den Spülvorgang steuern.

Auch könnten weitere spezielle Kundenwünsche in die Ansteuerung durch die Steuereinrichtung integriert werden. Das Bezugszeichen 46 bezieht sich auf Sensoreinrichtungen hier in Form von sogenannten PT100, welche eine Temperatur der entsprechenden Blasform bestimmen. In Kenntnis dieser Temperatur ist eine noch genauere Steuerung des Blasvorgangs möglich wobei die Berücksichtigung dieser Formtemperatur jedoch optional ist. Wie oben erwähnt wird auch die Steuerung der Reckkurve direkt von der Steuerungseinrichtung 20 übernommen. Diese Ansteuerung ist aus Gründen der Vereinfachung nur bei einer Blasstation eingezeichnet, tatsächlich jedoch bei allen Stationen vorhanden.

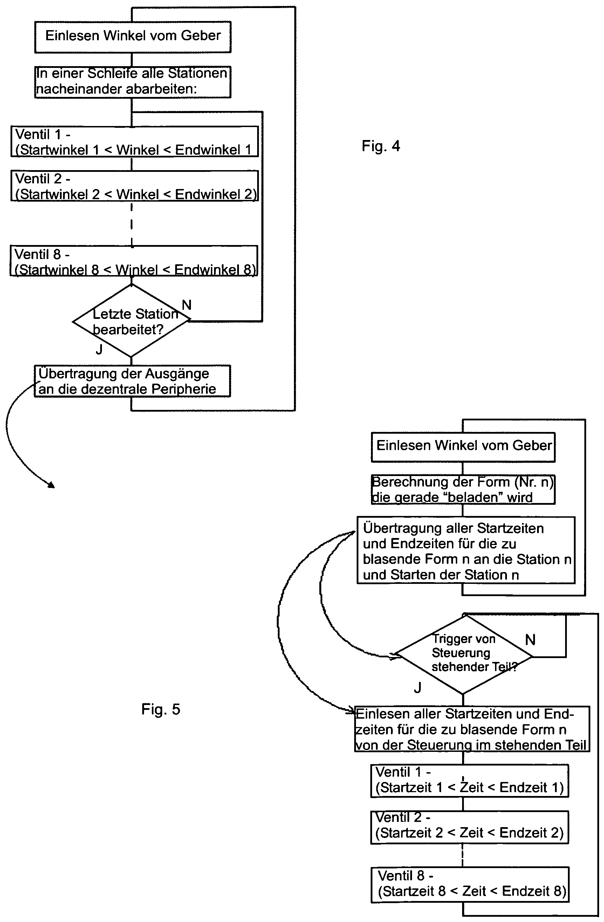

Fig. 4 zeigt ein erstes Ablaufdiagramm für eine erfindungsgemäße Vorrichtung. Im ersten Ablaufschritt werden die Winkelpositionen des Blasrades bestimmt und anschließend werden in einer ersten Schleife die einzelnen Stationen abgearbeitet. Jede einzelne Station 4 wird im Rahmen einer weiteren Schleife jedes einzelne Ventil abarbeiten. Dabei wird für jedes einzelne Ventil verglichen, ob der eingelesene Winkel zwischen einem Startwinkel und einem Endwinkel liegt. Ist dies der Fall, wird das entsprechende Ventil geöffnet. Für die einzelnen Ventile, die, wie oben erwähnt, unterschiedliche Teilabschnitte des Expansionsvorgangs steuern, können dabei unterschiedliche Anfangs und Endzeiten vorgegeben werden. Auch können für diejenigen Ventile, die an unterschiedlichen Blasstationen 4 jeweils für den gleichen Teilprozess verantwortlich sind, unterschiedliche Start und Endzeiten vorgegeben werden, um auf diese Weise individuellen Unterschieden der einzelnen Ventile Rechnung tragen zu können.

Nachdem alle Ventile abgearbeitet sind, erfolgt die Abarbeitung für die jeweils nächste Blasstation. Diese Vorgänge werden jeweils noch in der zentralen Steuerungseinrichtung 40 vorgenommen. Auf diese Weise werden für den bestimmten Drehwinkel des Blasrads die Zustände aller Ventile bestimmt und diese werden anschließend an die einzelnen Steuerungseinrichtungen 20 weitergeleitet. Auf diese Weise wird in der zentralen Steuerungseinrichtung ein Vergleich zwischen den betreffenden Start- und Endwinkeln und dem gemessenen Winkel des Blasrads vorgenommen und die Ergebnisse dieses Vergleichs werden in den einzelnen Steuerungseinrichtungen umgesetzt.

Fig. 5 zeigt einen weiteren Ablauf für ein erfindungsgemäßes Verfahren. Auch hier werden zunächst der oder die Winkel von dem Positionssensor bzw. -geber 30 eingelesen. In Abhängigkeit von diesem Winkel wird anschließend diejenige Form ermittelt, welche gerade mit einem Vorformling bestückt wird. Abschließend werden an diese Station alle Start- und Endzeiten für die einzelnen Ventile und auch die Reckstangensteuerung übertragen und anschließend wird der Ablauf für diese Station gestartet. Die entsprechende Station enthält damit ein Triggersignal von der zentralen Steuerung 40.

Die einzelnen Startzeiten und Endzeiten für die ermittelte Blasform werden in die vorgesehene Steuerungseinrichtung 20 eingelesen. Weiterhin wird in Beantwortung auf das Triggersignal der Zeitgeber gestartet. Danach wird für jedes Ventil die eingelesene Start- und die eingelesene Endzeit mit der Zeit des Zeitgebers verglichen, und so lange die Zeit des Zeitgebers zwischen der Startzeit und der Endzeit liegt, wird das entsprechende Ventil geöffnet. Dieser Vorgang wird für alle Ventile hintereinander durchgeführt. Damit erfolgen im Falle des in Fig. 5 gezeigten Ablaufs ebenfalls Vergleiche, wobei hier lediglich zeitliche Vergleiche zwischen der Zeit eines Zeitgebers und vorgegebenen Start- und Endzeiten vorgegeben werden. Diese Vergleiche werden dabei in Abfolge d. h. hintereinander durchgeführt, wobei es sich hier vorzugsweise nicht um eine hardwaremäßig vorhandene Vergleichseinrichtung (wie einen Komparator) handelt sondern diese Vergleiche softwaretechnisch, d. h. durch den Ablauf eines Computerprogramms, durchgeführt werden.

Damit kann der Ablauf der Behälterexpansion zeitbasiert gesteuert werden und damit auch unabhängig von der Transportgeschwindigkeit des Blasrads gehalten werden.

Vorzugsweise werden die Winkelpositionen in regelmäßigen Zeitabständen eingelesen und in Abhängigkeit hiervon jeweils die gerade zu bestückende Blasstation bestimmt.

Bei einer weiteren Ausführungsform wäre es auch möglich, die Peripherie in ausgelagerten Ein- und Ausgabebaugruppen vorzusehen, die über lokale Bussysteme oder Multipolstecker an die Steuereinrichtungen bzw. Servoumrichter 20 angebunden werden. Auf diese Weise ist es möglich, die Peripherie dort zu montieren, wo auch die Aktorik und die Sensorik platziert ist, was zu einer übersichtlichen Verdrahtung führt. Es wäre jedoch auch denkbar, die Aktorik und Sensorik in sogenannten Inseln oder Blöcken zusammen zu fassen und durch Integration von elektronischen Bauteilen busfähig auszuführen. Auf diese Weise lassen sich die dezentralen Periferiemodule einsparen. Beispielsweise sind von vielen Pneumatikherstellern Ventilinseln erhältlich, bei denen die einzelnen Ventile zu Gruppen zusammengefasst und mit einem Bus- Ansteuermodul versehen sind.

Bevorzugt arbeiten damit die einzelnen Steuerungseinrichtungen 20 autark, jedoch bei der in Fig. 5 gezeigten Ausführungsformen in Abhängigkeit von einem Triggersignal der zentralen Steuerung. Zusätzlich können bei dem in Fig. 5 gezeigten Ablauf auch noch die einzelnen Sensoren ausgelesen werden und auf diese Weise zusätzlich die Steuerung der Ventile und der Reckkurve beeinflußt bzw. verändert werden.

Zusätzlich ist bei den in den Fig. 4 und 5 gezeigten Abläufen auch noch (nicht gezeigt) die Steuerung der Reckstangen eingebunden. Dies bedeutet, dass im Fall von Fig. 5 in Abhängigkeit von dem Startsignal auch vorgegeben wird, in welchem zeitlichen Ablauf die Reckstange betätigt wird. Dabei kann genau vorgegeben werden, dass die Reckstange zu bestimmten Zeiten bestimmte Positionen anfahren soll. Auf diese Weise kann über den gesamten Zeitraum der Behältnisexpansion auch eine Reckkurve (durch zeitliche Paramter) vorgegeben werden. So kann in jeder Steuerungseinrichtung ein zeitabhängiger Reckverlauf hinterlegt sein.

Bei dem in Fig 4 gezeigten Verfahren können an die Steuerungseinrichtungen neben den Öffnungs- und Schließbefehlen für die Ventile auch Vorgaben für das Anfahren von bestimmten Positionen der Reckstange übermittelt werden.

Bei einer bevorzugten Ausführungsform ist es möglich, die Steuerungseinrichtung direkt an der Antriebseinrichtung anzuordnen. So ist es möglich, als Antrieb für die Reckstange einen sogenannten Frequenzumrichtermotor vorzusehen. Diese Frequenzumrichtung bzw. deren Steuerung kann auch die Ansteuerung der Ventile übernehmen.

## Patentansprüche

1. Vorrichtung (1) zum Erzeugen von Kunststoffbehältnissen mit einer Transporteinrichtung (2), an der eine Vielzahl von Blasstationen (4) zum Expandieren von Vorformlingen zu Kunststoffbehältnissen angeordnet ist, wobei jede dieser Blasstationen einen Aufnahmeraum für einen zu expandierenden Vorformling, wenigstens eine Zuführleitung zum Zuführen eines gasförmigen Mediums an den Vorformling, wenigstens ein Ventil (12), welches die Zuführung des gasförmigen Mediums an den Vorformling steuert, ein betätigbares Reckelement (14) zum Recken der Vorformlinge, und jede Blasstation (4) eine autarke Steuerungseinrichtung (20) aufweist, **dadurch gekennzeichnet, dass** jede Station eine eigene elektrische Antriebseinrichtung (16) zum Bewegen des Reckelements (14) aufweist, und wobei jede Steuerungseinrichtung (20) sowohl das Ventil (12) als auch die Antriebseinrichtung (16) zum Bewegen des Reckelements (14) zur Erzeugung des Kunststoffbehältnisses zeitbasiert in Abhängigkeit von einem Startsignal steuert, wobei jede Blasstation (4) einen Zeitgeber (24) aufweist, welcher abhängig vom Startsignal aktivierbar ist und einen zeitlichen Rahmen für einen Blasvorgang und innerhalb des Blasvorgangs stattfindenden Vorgängen steuert, wobei der Zeitgeber (24) derart gestaltet ist, dass durch den Zeitgeber eine Winkelinformation eingelesen wird, um an Hand dieser Winkelinformation gezielt für jede Blasstation (4) die zeitlich genau ablaufenden Vorgänge vorzugeben, wobei der Zeitgeber (24) bei einem bestimmten Winkel gestartet wird, und danach eine winkelunabhängige Ablaufsteuerung erfolgt.

2. Vorrichtung (1) nach Anspruch 1, **dadurch gekennzeichnet, dass** jede Blasstation (4) eine Vielzahl von Ventilen (12) aufweist, welche die Zuführung von gasförmigen Medien an die Behältnisse steuern.

3. Vorrichtung nach wenigstens einem der vorangegangenen Ansprüche, **dadurch gekennzeichnet, dass** das betätigbare Reckelement (14) eine Reckstange (14) ist.

4. Vorrichtung nach wenigstens einem der vorangegangenen Ansprüche, **dadurch gekennzeichnet, dass** wenigstens eine Blasstation eine Sensoreinrichtung (22) aufweist, welche einen physikalischen Zustand des Behältnisses (10) oder der Blasstation erfasst.

5. Vorrichtung nach Anspruch 4, **dadurch gekennzeichnet, dass** die Sensoreinrichtung (22) in Kommunikationsverbindung mit der Steuereinrichtung (20) steht.

6. Vorrichtung nach wenigstens einem der vorangegangenen Ansprüche, **dadurch gekennzeichnet, dass** die Vorrichtung einen Positionssensor (30) aufweist, der eine Position der Transporteinrichtung (2) erfasst.

7. Vorrichtung nach wenigstens einem der vorangegangenen Ansprüche, **dadurch gekennzeichnet, dass** die Vorrichtung eine zentrale Steuerungseinrichtung (40) aufweist, welche in Kommunikationsverbindung mit den Steuerungseinrichtungen (20) der einzelnen Blasstationen (4) steht.

8. Vorrichtung nach wenigstens einem der vorangegangenen Ansprüche, **dadurch gekennzeichnet, dass** die Vorrichtung eine Speichereinrichtung (18) aufweist, in der Korrelationsdaten zur Steuerung der Antriebseinrichtung (14) und der Ventile (12) abgelegt sind.

9. Verfahren zum Erzeugen von Kunststoffbehältnissen aus Vorformlingen, wobei die Vorformlinge in einer Vielzahl von Blasstationen (4) transportiert werden, wobei die Blasstationen mit einer Transporteinrichtung (2) transportiert werden, und während dieses Transports zu Kunststoffbehältnissen expandiert werden, wobei für den Expansionsvorgang in jeder Blasstation (4) den Vorformlingen ein gasförmiges Medium zugeführt wird und die Zuführung dieses gasförmigen Mediums mittels wenigstens eines Ventils (12) gesteuert wird, und wobei die Behältnisse (10) in jeder Blasstation (4) für den Expansionsvorgang mit wenigstens einem betätigbaren Reckelement (14) gereckt, und jede Blasstation (4) eine autarke Steuerungseinrichtung (20) aufweist werden **dadurch gekennzeichnet, dass** jedes dieser Reckelemente (14) mit jeweils einer eigenen elektrischen Antriebseinrichtung (16) unabhängig von den jeweils anderen Reckelementen (14) bewegbar ist, und wobei jede Steuerungseinrichtung (20) sowohl den Reckvorgang als auch die Zuführung des gasförmigen Mediums in die Behältnisse zeitbasiert in Abhängigkeit von einem Startsignal steuert, welches einer ausgewählten Blasstation (4) übermittelt wird, wobei ein Zeitgebers (24) dieser Blasstation (4) abhängig von dem Startsignal aktiviert wird und einen zeitlichen Rahmen für einen Blasvorgang und innerhalb des Blasvorgangs stattfindenden Vorgängen steuert, und wobei der Zeitgeber (24) derart gestaltet ist, dass durch den Zeitgeber eine Winkelinformation eingelesen wird, um an Hand dieser Winkelinformation gezielt für jede Blasstation (4) die zeitlich genau ablaufenden Vorgänge vorzugeben, wobei der Zeitgeber (24) bei einem bestimmten Winkel gestartet wird, und danach eine winkelunabhängige Ablaufsteuerung erfolgt.

10. Verfahren nach Anspruch 9**, dadurch gekennzeichnet, dass** Positionen der Transporteinrichtung (2) mittels eines Positionssensors (30) erfasst werden.

11. Verfahren nach Anspruch 10, **dadurch gekennzeichnet, dass** in Reaktion auf eine Erfassung der Position der Transporteinrichtung (2) eine bestimmte Blasstation (4) ausgewählt wird.

12. Verfahren nach wenigstens einem der vorangegangenen Ansprüche 9 bis 11, **dadurch gekennzeichnet, dass** die Steuerung der Antriebselemente (16) und des Ventils (12) miteinander korreliert sind.

## Claims

1. Apparatus (1) for producing plastic containers, comprising a transport device (2), on which there is arranged a plurality of blowing stations (4) for expanding preforms to form plastic containers, wherein each of these blowing stations has a receiving space for a preform to be expanded, at least one supply line for supplying a gaseous medium to the preform, at least one valve (12) which controls the supply of the gaseous medium to the preform, a mechanically operated stretching element (14) for stretching the preforms, and each blowing station (4) has an independent control device (20),
**characterised in that** each station has an own electrical drive device (16) for moving the stretching element (14), and wherein each control device (20) controls both the valve (12) and the drive device (16) for moving the stretching element (14) for producing the plastic container time based depending on a starting signal, wherein each blowing station (4) has a timer (24) which can be activated depending on the starting signal and controls a time frame for a blowing process and processes which take place during the blowing process, wherein the timer (24) is designed in such a way that an angle information is read in by the timer, to preset processes that take place accurately timed by means of these angle information specifically for each blowing station (4), wherein the timer (24) is started at a specific angle and after that an angle independent process control takes place.

2. Apparatus (1) according to claim 1, **characterised in that** each blowing station (4) has a plurality of valves (12) which control the supply of gaseous media to the containers.

3. Apparatus according to at least one of the preceding claims, **characterised in that** the mechanically operated stretching element (14) is a stretching rod (14).

4. Apparatus according to at least one of the preceding claims, **characterised in that** at least one blowing station has a sensor device (22) which senses a physical state of the container (10) or of the blowing station.

5. Apparatus according to claim 4, **characterised in that** the sensor device (22) is in communication connection with the control device (20).

6. Apparatus according to at least one of the preceding claims, **characterised in that** the apparatus has a position sensor (30) which senses a position of the transport device (2).

7. Apparatus according to at least one of the preceding claims, **characterised in that** the apparatus has a central control device (40) which is in communication connection with the control devices (20) of the individual blowing stations (4).

8. Apparatus according to at least one of the preceding claims, **characterised in that** the apparatus has a memory device (18), in which correlation data for controlling the drive device (14) and the valves (12) are stored.

9. Method for producing plastic containers from preforms, wherein the preforms are transported in a plurality of blowing stations (4), wherein the blowing stations are transported with a transport device (2) and during this transport are expanded to form plastic containers, wherein, for the expansion process, a gaseous medium is supplied to the preforms in each blowing station (4) and the supply of this gaseous medium is controlled by means of at least one valve (12), and wherein the containers (10) are stretched by at least one mechanically operated stretching element (14) in each blowing station (4) for the expansion process, and each blowing station (4) has an independent controlling device (20), **characterised in that** each of those stretching elements (14) can move independently of each of the other stretching elements (14) by means of a respective own electronic drive device (16), and wherein each control device (20) controls both the stretching process and the supply of the gaseous medium into the containers time based depending on a starting signal, which can be transmitted to a selected blowing statin (4), wherein a timer (24) of this blowing station (4) is activated depending on the starting signal and controls a time frame for a blowing process and processes which take place during the blowing process, and wherein the timer (24) is designed in such a way that an angle information is read in by the timer, to preset processes that take place accurately timed by means of these angle information specifically for each blowing station (4), wherein the timer (24) is started at a specific angle and after that an angle independent process control takes place.

10. Method according to claim 9, **characterised in that** positions of the transport device (2) are sensed by means of a position sensor (30).

11. Method according to claim 10, **characterised in that** a certain blowing station (4) is selected in reaction to a sensing of the position of the transport device (2).

12. Method according to at least one of the preceding claims 9 to 11, **characterised in that** the control of the drive elements (16) and of the valve (12) are correlated with one another.

## Revendications

1. Dispositif (1) de production de récipients en matière plastique comprenant un système de transport (2), sur lequel étant agencées une pluralité de stations de soufflage (4) permettant l'expansion de préformes pour en faire des récipients en matière plastique, dans lequel chacune de ces stations de soufflage comprend un espace de réception pour une préforme à amener en expansion, au moins une conduite d'amenée destinée à amener un milieu gazeux à la préforme, au moins une soupape (12) qui commande l'amenée du milieu gazeux à la préforme, un élément d'étirage (14) pouvant être actionné et destiné à étirer les préformes, et chaque station de soufflage (4) comprend un dispositif de commande (20) autonome, **caractérisé en ce que** chaque station comprend un système d'entraînement électrique (16) distinct destiné à déplacer l'élément d'étirage (14), et dans lequel chaque système de commande (20) contrôle aussi bien la soupape (12) que le système d'entraînement (16) destiné à déplacer l'élément d'étirage (14) pour produire le récipient en matière plastique sur une base temporelle en fonction d'un signal de démarrage, dans lequel chaque station de soufflage (4) comprend une horloge (24), laquelle peut être activée en fonction du signal de démarrage et commande un délai de mise en oeuvre pour un processus de soufflage et des processus ayant lieu pendant le processus de soufflage, dans lequel l'horloge (24) est conçue de telle manière qu'une information d'angle est lue par l'horloge, afin de prédéfinir les processus se déroulant de manière précise dans le temps sur la base de cette information d'angle de façon ciblée pour chaque station de soufflage (4), dans lequel l'horloge (24) est démarrée pour un certain angle, puis une commande séquentielle indépendante de l'angle s'effectue.

2. Dispositif (1) selon la revendication 1, **caractérisé en ce que** chaque station de soufflage (4) comprend une pluralité de soupapes (12), lesquelles commandent l'amenée de milieux gazeux aux récipients.

3. Dispositif selon au moins l'une des revendications précédentes, **caractérisé en ce que** l'élément d'étirage (14) pouvant être actionné est une barre d'étirage (14).

4. Dispositif selon au moins l'une des revendications précédentes, **caractérisé en ce qu'**au moins une station de soufflage comprend un système de détection (22), lequel détecte un état physique du récipient (10) ou de la station de soufflage.

5. Dispositif selon la revendication 4, **caractérisé en ce que** le système de détection (22) est en liaison de communication avec le système de commande (20).

6. Dispositif selon au moins l'une des revendications précédentes, **caractérisé en ce que** le dispositif comprend un capteur de position (30), qui détecte une position du système de transport (2).

7. Dispositif selon au moins l'une des revendications précédentes, **caractérisé en ce que** le dispositif comprend un système de commande central (40), lequel est en liaison de communication avec les systèmes de commande (20) des stations de soufflage (4) individuelles.

8. Dispositif selon au moins l'une des revendications précédentes, **caractérisé en ce que** le dispositif comprend un système de mise en mémoire (18), dans lequel des données de corrélation permettant de commander le système d'entraînement (14) et les soupapes (12) sont mises en mémoire.

9. Procédé de production de récipients en matière plastique à partir de préformes, dans lequel les préformes étant transportées dans une pluralité de stations de soufflage (4), dans lequel les stations de soufflage étant transportées au moyen d'un système de transport (2) et amenées en expansion pour devenir des récipients en matière plastique pendant ce transport, dans lequel un milieu gazeux étant amené aux préformes dans chaque station de soufflage (4) pour le processus d'expansion et l'amenée de ce milieu gazeux étant commandée au moyen d'au moins une soupape (12), et dans lequel les récipients (10) étant étirés dans chaque station de soufflage (4) pour le processus d'expansion au moyen d'au moins un élément d'étirage (14) pouvant être actionné, et chaque station de soufflage (4) comprend un système de commande (20) autonome, **caractérisé en ce que** chacun de ces éléments d'étirage (14) peut être déplacé indépendamment des autres éléments d'étirage (14) au moyen dans chaque cas d'un système d'entraînement électrique (16) distinct, et dans lequel chaque système de commande (20) contrôle aussi bien le processus d'étirage que l'amenée du milieu gazeux dans les récipients sur une base temporelle en fonction d'un signal de démarrage, lequel est transmis à une station de soufflage (4) sélectionnée, dans lequel une horloge (24) de cette station de soufflage (4) est activée en fonction du signal de démarrage et commande un délai de mise en oeuvre pour un processus de soufflage et des processus ayant lieu pendant le processus de soufflage, et dans lequel l'horloge (24) est conçue de telle manière qu'une information d'angle est lue par l'horloge, afin de prédéfinir les processus se déroulant de manière précise dans le temps sur la base de cette information d'angle de façon ciblée pour chaque station de soufflage (4), dans lequel l'horloge (24) est démarrée pour un certain angle, puis une commande séquentielle indépendante de l'angle s'effectue.

10. Procédé selon la revendication 9, **caractérisé en ce que** des positions du système de transport (2) sont détectées au moyen d'un capteur de position (30).

11. Procédé selon la revendication 10, **caractérisé en ce qu'**une station de soufflage (4) déterminée est sélectionnée en réponse à une détection de la position du système de transport (2).

12. Procédé selon l'une quelconque des revendications précédentes 9 à 11, **caractérisé en ce que** la commande des éléments d'entraînement (16) et la commande de la soupape (12) sont corrélées l'une à l'autre.
